# EUROPÄISCHE PATENTSCHRIFT

(11) **EP 2 812 623 B1**
(45) Veröffentlichungstag und Bekanntmachung des Hinweises auf die Patenterteilung: **03.02.2016**
(21) Anmeldenummer: 13704003.6
(22) Anmeldetag: 07.02.2013
(51) Int. Cl.: F16P 3/08

(54) **VORRICHTUNG ZUM ÜBERWACHEN DES ZUSTANDES EINER EINRICHTUNG**
DEVICE FOR MONITORING THE STATE OF A SYSTEM
DISPOSITIF POUR LA SURVEILLANCE DE L'ÉTAT D'UNE INSTALLATION

(30) Priorität: 11.02.2012 DE 102012002767
(43) Veröffentlichungstag der Anmeldung: 17.12.2014
(73) Patentinhaber: EUCHNER GmbH + Co. KG, 70771 Leinfelden-Echterdingen (DE)
(72) Erfinder: GRIMM, Ilo, 71111 Waldenbruch (DE)
(74) Vertreter: Ruckh, Rainer Gerhard
(86) Internationale Anmeldenummer: PCT/EP2013/000368
(87) Internationale Veröffentlichungsnummer: WO 2013/117336

(56) Entgegenhaltungen:
- WO-A1-2007/051236
- DE-A1- 19 649 593
- DE-U1- 20 313 230
- GB-A- 2 158 911
- JP-A- 2004 156 312
- US-A1- 2002 142 831

## Beschreibung

Die Erfindung betrifft eine Vorrichtung zum Überwachen des Zustandes einer Einrichtung, insbesondere einen Sicherheitsschalter zum Überwachen des geschlossenen Zustandes einer Schutzeinrichtung einer Maschine, mit den Merkmalen im Oberbegriff von Anspruch 1.

Sicherheitsschalter werden beispielsweise zum Überwachen des Zustandes einer Schutzeinrichtung einer Maschine eingesetzt, etwa zum Überwachen des geschlossenen Zustandes einer Schutztür eines Schutzraumes für eine Werkzeugmaschine oder einen Industrieroboter. Im geschlossenen Zustand der Schutzeinrichtung kann der Sicherheitsschalter ein Freigabesignal für den Betrieb der Maschine bereitstellen. Beim Öffnen der Schutzeinrichtung unterbricht der Sicherheitsschalter beispielsweise mittels eines durch Formschluss zu betätigenden elektrischen Kontaktpaares oder mittels eines elektronischen Schaltelements einen oder mehrere Stromkreise. Das Freigabesignal wird daraufhin nicht mehr bereitgestellt. Die zugehörige Maschine kann daraufhin in einen sicheren Betriebszustand überführt werden, beispielsweise abgeschaltet werden, oder das Einschalten der Maschine kann verhindert werden.

In einigen Anwendungsfällen ist es erforderlich, dass der geschlossene Zustand der Schutzeinrichtung lösbar fixierbar ist, beispielsweise wenn in einem Betriebszustand der Maschine verhindert werden soll, dass die Schutzeinrichtung geöffnet werden kann. Erst bei völligem Stillstand der Maschine wird die Fixierung aufgehoben und die Schutzeinrichtung kann geöffnet werden.

Bei Sicherheitsschaltern mit mechanischen Betätigern erfolgt eine solche Fixierung oder Zuhaltung beispielsweise durch Arretieren des mechanischen Betätigers in seinem in den Schalterkopf eingeführten Zustand. Alternativ hierzu ist bei mechanischen Betätigern aber insbesondere bei elektronischen Betätigern eine Magnetkraftzuhaltung möglich. Aus der DE 101 46 828 A1 ist ein entsprechendes Zuhaltesystem eines Sicherheitsschalters bekannt.

Die Sicherheitsschalter sind in der Regel mit übergeordneten Steuerungen verbunden, an welche Ausgangssignale gesendet werden und dort auch an Anzeigemitteln signalisierbar sind. Wenn eine Bedienperson den aktuellen Zustand des Sicherheitsschalters und beispielsweise der Zuhaltung erfahren möchte, tut er dies mithilfe der Steuerung.

Die EP 0 990 835 A1 offenbart eine mechanisch, elektromechanisch oder anders angetriebene Vorrichtung, welche aus mindestens zwei gegeneinander beweglichen Teilen besteht und im Inneren der Teile Wellenleiter beinhaltet. Diese sind so angeordnet, dass in einer bestimmten Position die Lichtwellen durch alle Teilwellenleiter durchkommen und detektiert werden. In den übrigen Positionen ist der Wellendurchfluss zwangsläufig unterbrochen.

Die DE 196 49 593 offenbart eine Verriegelungseinrichtung zur Zugangskontrolle an Arbeitsgeräten, wobei die Verriegelungseinrichtung einen optischen Sensor mit einem Sender und einem Empfänger aufweist. Nur im geschlossenen Zustand der Verriegelungseinrichtung, in dem der Betrieb des Arbeitsgeräts freigegeben ist, treffen vom Sender emittierte kodierte optische Signale auf den Empfänger, dessen Ausgangssignal in eine Auswerteeinheit eingelesen wird. Der Betrieb des Arbeitsgeräts wird über die Auswerteeinheit gesperrt oder freigegeben.

Die FR 2 684 167 A offenbart eine Vorrichtung mit zwei zusammensteckbaren Profilen aus Aluminium, wobei in beiden Profilstücken faseroptische Elemente derart angeordnet sind, dass beim Zusammenstecken der Profile eine optische Kontaktbrücke gebildet ist.

Die DE 692 01 486 T2 zeigt eine elektromagnetische Schließvorrichtung mit einem Elektromagneten, der in einem länglichen kanalförmigen Gehäuse angeordnet ist. Das Gehäuse und der Elektromagnet haben langgestreckte Vorsprünge und/oder Ausnehmungen, die derart zusammenwirken, dass außer einer Längsbewegung jegliche Bewegung des Elektromagneten verhindert ist.

Die GB 2 158 911 A zeigt eine Schutzeinrichtung für eine Maschine auf, wobei das Lichtleitmittel einen Strahlteiler aufweist, der das über das Eintrittsfenster eintretende Licht auf mindestens zwei Austrittsfenster aufteilt.

Der vorliegenden Erfindung liegt die Aufgabe zugrunde, eine gattungsgemäße Vorrichtung bereitzustellen, deren Betriebszustände mit möglichst geringem Aufwand und dennoch dauerhaft sicher ermittelbar sind.

Diese Aufgabe ist durch die im Anspruch 1 bestimmte Vorrichtung gelöst. Besondere Ausführungsarten sind in den Unteransprüchen bestimmt.

Gemäß dem Kennzeichen von Anspruch 1 ist vorgesehen, dass das Lichtleitmittel einen Strahlteiler aufweist, der das über das Eintrittsfenster eintretende Licht auf mindestens zwei Austrittsfenster aufteilt, damit auch im geschlossenen Zustand der Schutzeinrichtung das Signal des Signalmittels wahrnehmbar ist, und zwar sowohl innerhalb als auch außerhalb der Schutzeinrichtung und ungeachtet dessen, dass das Signalmittel von dem Betätiger abgedeckt ist.

In einer Ausführungsart betrifft die Erfindung eine Vorrichtung mit einem Schalterkopf und einem Betätiger, die in Wechselwirkung miteinander bringbar sind und dadurch die Vorrichtung steuern. Beispielsweise kann der Schalterkopf an einem feststehenden Teil der Einrichtung angeordnet sein, etwa an einem Rahmen eines Schutzgitters, und der Betätiger kann an einer gegenüber dem Rahmen beweglichen Schutztür angeordnet sein. Bei geschlossener Tür sind der Schalterkopf und der Betätiger in Wechselwirkung, so dass die Vorrichtung an eine übergeordnete Steuereinrichtung den geschlossen Zustand der Schutzeinrichtung signalisiert.

Gemäß der vorliegenden Erfindung weist ein Teil der Vorrichtung, insbesondere der Schalterkopf, ein optisches Signalmittel auf zum optischen Signalisieren eines Betriebszustandes der Vorrichtung. Beispielsweise kann eine Betriebsbereitschaft signalisiert werden und/oder der geschlossene Zustand der Schutzeinrichtung. Der andere Teil der Vorrichtung, insbesondere der Betätiger, weist ein Lichtleitmittel auf, das mindestens ein Eintrittsfenster und mindestens ein Austrittsfenster für das von dem optischen Signalmittel ausgesandte Licht aufweist. In einem Zustand der Vorrichtung, in dem der Schalterkopf und der Betätiger in Wechselwirkung miteinander sind, insbesondere im geschlossenen Zustand der Schutzeinrichtung, tritt das von dem Signalmittel ausgestrahlte Licht über mindestens eines der Eintrittsfenster in das Lichtleitmittel ein und wird von diesem zu mindestens einem der Austrittsfenster geleitet, wo das Licht austritt und damit auch im geschlossenen Zustand der Schutzeinrichtung das Signal des optischen Signalmittels wahrnehmbar ist.

Vorzugsweise ist das optische Signalmittel am Schalterkopf angeordnet, der ohnehin aufgrund seiner anderweitigen Funktionen über eine elektrische Energieversorgung verfügt. Demgegenüber kann das Lichtleitmittel vorzugsweise am Betätiger angeordnet sein, der beispielsweise an einem beweglichen Teil der Einrichtung angeordnet ist und insbesondere über keine elektrische Energieversorgung verfügen muss.

Es ist vorteilhaft, dass durch die erfindungsgemäße Vorrichtung auch dann ein optisches Signalisieren möglich ist, wenn das optische Signalmittel in dem Zustand, in dem der Schalterkopf und der Betätiger in Wechselwirkung miteinander sind, insbesondere in Anlage aneinander sind, von dem Betätiger abgedeckt ist. Durch die optional mehreren Austrittsfenster besteht darüber hinaus die Möglichkeit, das optische Signal in unterschiedlichen Richtungen abzustrahlen, beispielsweise auch gleichzeitig in das Innere und Äußere der Schutzeinrichtung. Gleichzeitig ist das optische Signalmittel vor Verunreinigung, Beschädigung und/oder Manipulation geschützt angeordnet. In einer Ausführungsart schließen das Eintrittsfenster und/oder das Austrittsfenster bündig mit der sie umgebenden Oberfläche ab. Dadurch ist sowohl eine Verschmutzung als auch eine Beschädigung des Lichtleitmittels zuverlässig verhindert.

In einer Ausführungsart ist das optische Signalmittel an dem Schalterkopf und mindestens ein Eintrittsfenster an dem Betätiger derart angeordnet, dass in dem Zustand der Vorrichtung, in dem der Schalterkopf und der Betätiger in Wechselwirkung miteinander sind, das optische Signalmittel und das Eintrittsfenster einander gegenüberliegen. Dadurch ist eine vorteilhafte Einkopplung des vom Signalmittel ausgesandten Lichts gewährleistet. Gleichzeitig wird das optische Signalmittel durch den Betätiger abgedeckt und damit vor Verunreinigungen und Beschädigungen geschützt.

In einer Ausführungsart verläuft die Strahlrichtung des aus dem Austrittsfenster austretenden Lichts gegenüber der Strahlrichtung des von einer Lichtquelle des optischen Signalmittels erzeugten Lichts schräg und insbesondere quer. Dadurch kann das optische Signal in verschiedene Richtungen abgestrahlt werden, insbesondere auch solche Richtungen, die beispielsweise im geschlossenen Zustand der Schutzeinrichtung von dem optischen Signalmittel nicht abgedeckt werden könnten. Vorzugsweise wird durch das Lichtleitmittel die Strahlrichtung umgelenkt, beispielsweise durch entsprechende Reflexionsflächen oder teildurchlässige Abschnitte.

In einer Ausführungsart weist das optische Signalmittel eine Lichtquelle und ein weiteres Lichtleitmittel auf. An das weitere Lichtleitmittel kann ein Lichtaustrittsfenster anschließen oder das weitere Lichtleitmittel kann selbst das Lichtaustrittsfenster bilden. Als Quelle für das optische Signalmittel kann eine Leuchtdiode eingesetzt werden, vorzugsweise eine Leuchtdiode, die je nach Ansteuerung Lichtsignale unterschiedlicher Farbe aussendet. Das weitere Lichtleitmittel kann ebenso wie das Lichtleitmittel im Betätiger aus einem für sichtbares Licht transparenten Kunststoff hergestellt sein, beispielsweise aus Polymethylmetacrylat.

In einer Ausführungsart weist das Lichtleitmittel einen Strahlteiler in Form eines Prismas auf. Insbesondere bei Verwendung eines effizienten Leuchtmittels ist die Aufteilung des ausgesandten Lichtstrahls in mehrere Teilstrahlen einer Erkennbarkeit des optischen Signals nicht abträglich. Erforderlichenfalls können kritische Betriebszustände mit einer speziellen Lichtfarbe und/oder mit erhöhter Lichtintensität und/oder einem gepulsten Lichtsignal signalisiert werden.

In einer Ausführungsart ist der Schalterkopf mindestens teilweise in einer Nut eines Profils angeordnet, beispielsweise eines Aluminiumprofils, wie es im Montagebau verwendet wird. Das Profil kann Teil der Vorrichtung sein, gleichzeitig aber durch einen entsprechenden Einbau auch Teil der Schutzeinrichtung sein. In dem Zustand, in dem der Schalterkopf und der Betätiger in Wechselwirkung miteinander sind, ist ein Lichtaustrittsfenster des optischen Signalmittels durch den vorzugsweise ebenfalls mindestens teilweise in einer Nut eines Profils angeordneten Betätiger abgedeckt. Durch die Anordnung in der Nut eines Profils ist eine besonders platzsparende Bauweise gewährleistet. Darüber hinaus ist nicht nur das optische Signalmittel, sondern auch der Schalterkopf und gegebenenfalls auch der Betätiger wirksam gegen Verunreinigung und vor allem Beschädigung geschützt angeordnet.

In einer Ausführungsart weist die Vorrichtung eine Zuhalteeinrichtung zum lösbaren Fixieren eines vorgebbaren Zustandes der Einrichtung auf, insbesondere des geschlossenen Zustandes der Schutzeinrichtung. Mit dem optischen Signalmittel ist dann jedenfalls auch ein Zustand der Zuhalteeinrichtung signalisierbar, beispielsweise die Zustände "Zuhaltung bereit", "Zuhaltung aktiviert", "Höhe der Zuhaltekraft ausreichend". Auch die Höhe der Zuhaltekraft kann optisch signalisiert werden, beispielsweise mit einer speziellen Lichtfarbe und/oder mit erhöhter Lichtintensität und/oder einem gepulsten Lichtsignal.

In einer Ausführungsart weist die Zuhalteeinrichtung einen vorzugsweise im Schalterkopf angeordneten Magneten auf, der in dem Zustand der Vorrichtung, in dem der Schalterkopf und der Betätiger in Wechselwirkung miteinander sind, in Wirkverbindung mit einem den magnetischen Fluss leitenden Gegenelement oder Jochelement des Betätigers bringbar ist. Der Magnet kann insbesondere einen Elektromagneten umfassen, der bei Bestromen das Gegenelement des Betätigers anzieht und im angezogenen Zustand fixiert. Dieser Zustand kann durch das optische Signalmittel signalisiert werden und durch das Lichtleitmittel in unterschiedlichen Richtungen abgestrahlt werden.

In einer Ausführungsart weist der Schalterkopf einen Lesekopf auf, der in dem Zustand der Vorrichtung, in dem der Schalterkopf und der Betätiger in Wechselwirkung miteinander sind, elektrisch kontaktlos in Wechselwirkung mit dem Betätiger ist. Der Betätiger kann hierzu beispielsweise einen Transponder aufweisen, der mit einer eindeutigen Kennung codiert ist. Auch der Zustand einer erfolgreichen Decodierung und damit einer Akzeptanz des Betätigers durch den Sicherheitsschalter kann durch das optische Signalmittel signalisiert werden.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Draufsicht auf eine schematisch dargestellte Gesamtanordnung einer erfindungsgemäßen Vorrichtung;
- Fig. 2: zeigt eine perspektivische Ansicht auf ein Ausführungsbeispiel eines in einem Profil angeordneten Schalterkopfes;
- Fig. 3: zeigt in vergrößerter Darstellung Einzelheiten des optischen Signalmittels;
- Fig. 4: zeigt in vergrößerter Darstellung Einzelheiten des Lesekopfes;
- Fig. 5: zeigt eine perspektivische Ansicht eines Betätigers;
- Fig. 6: zeigt in vergrößerter Darstellung einen Querschnitt durch den Betätiger;
- Fig. 7: zeigt eine Seitenansicht eines zweiten Ausführungsbeispiels eines Betätigers; und
- Fig. 8: zeigt einen Schnitt quer zur Längsachse des Schalterkopfes durch den Betätiger.

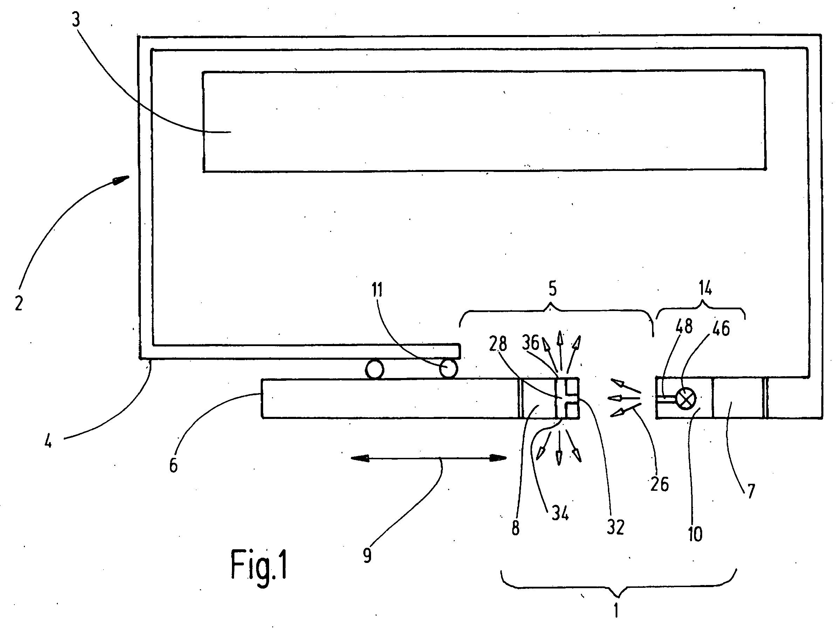

Die Fig. 1 zeigt eine Draufsicht auf eine schematisch dargestellte Gesamtanordnung einer Vorrichtung 1 zum Überwachen des Zustandes einer Schutzeinrichtung 2 einer Maschine 3, insbesondere des geschlossenen Zustandes einer Schutztür, mit der eine Raumtrenneinrichtung verschließbar ist, um beispielsweise das Bedienpersonal vor einer Gefährdung durch die im Betrieb befindliche Maschine 3 zu schützen.

Die Schutzeinrichtung 2 weist ein erstes Teil 4 auf, beispielsweise einen Rahmen. Das erste Teil 4 weist eine Öffnung 5 auf, die durch ein zweites Teil 6 schließbar ist, beispielsweise durch eine Schutztür, die entsprechend dem Doppelpfeil 9 gegenüber dem ersten Teil 4 bewegbar ist und durch Lagerelemente 11 beweglich gelagert ist; alternativ zum Schieben kann die Schutztür auch schwenkbar sein.

Die Vorrichtung 1 weist ein vorzugsweise am feststehenden ersten Teil 4 der Schutzeinrichtung 2 angeordnetes Schalterelement 7 auf, das einen Schalterkopf 10 umfasst, sowie einen vorzugsweise am beweglichen zweiten Teil 6 angeordneten Betätiger 8, der beim Schließen der Schutztür mit dem Schalterkopf 10 in Wirkverbindung bringbar ist und dadurch das Schalterelement 7 steuert. Das Schalterelement 7 kann entweder selbst, über separate Schaltelemente oder über eine neben- oder übergeordnete Steuereinrichtung die Maschine 3 ein- und ausschalten.

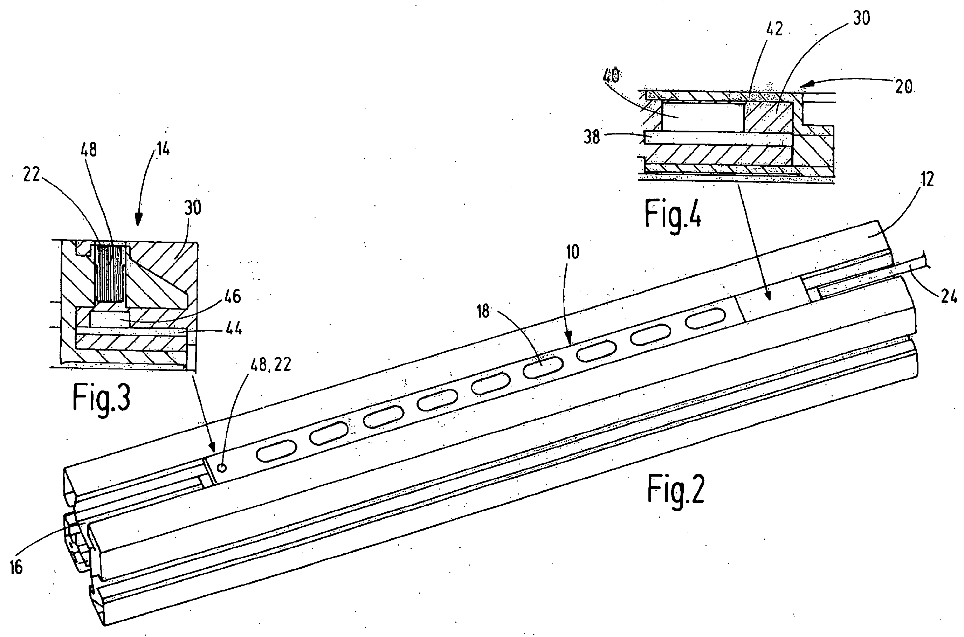

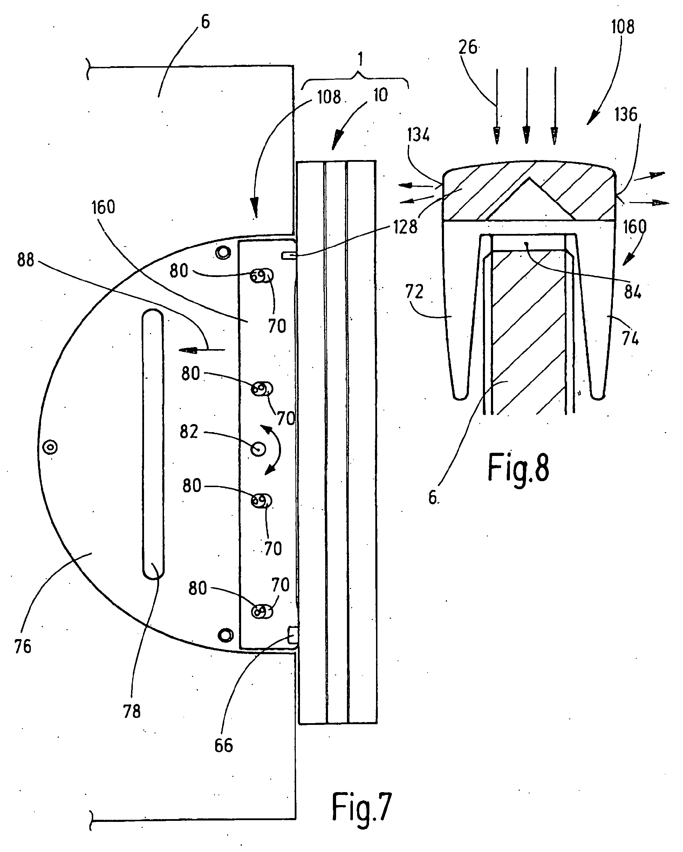

Im Ausführungsbeispiel weist der Betätiger 8 einen in der Fig. 1 nicht dargestellten Transponder 66 (Fig. 7) auf, der elektrisch kontaktlos mit dem Schalterkopf 10, der eine Lesespule 30 (Fig. 4) aufweist, wechselwirken kann. Eine Wechselwirkung ist dabei nur möglich, wenn die Schutzeinrichtung 2 geschlossen ist. In einem ersten Betriebsmodus wird beim Schließen der Schutzeinrichtung 2 durch die Wechselwirkung zwischen Betätiger 8 und Schalterkopf 10 beispielsweise ein Schaltelement geschlossen, und dadurch ein Freigabesignal für den Betrieb der Maschine 3 bereitgestellt.

Beim Öffnen der Schutzeinrichtung 2 wird die Wechselwirkung unterbrochen, das Schaltelement geöffnet und die Maschine 3 abgeschaltet.

Die Vorrichtung 1 kann auch eine Zuhaltung aufweisen, mittels welcher der geschlossene Zustand der Schutzeinrichtung 2 lösbar arretierbar ist. Die Zuhaltung kann mechanisch erfolgen, beispielsweise durch eine vorzugsweise formschlüssige Fixierung des Betätigers 8 am Schalterkopf 7, oder durch eine magnetische Kraft.

Der Schalterkopf 10 weist ein optisches Signalmittel 14 auf, das eine Lichtquelle 46 und ein das Licht der Lichtquelle 46 bis an die Oberfläche des Schalterkopfes 10 leitendes Lichtleitmittel 48 aufweist. Das von dem Signalmittel 14 emittierte Licht 26 kann im geschlossenen Zustand der Schutzeinrichtung 2 über das Eintrittsfenster 32 in den Betätiger 8 eintreten und nach einer 90°-Umlenkung durch ein Lichtleitmittel 28 an den beiden Austrittsfenstern 34, 36 austreten. Damit ist auch im geschlossenen Zustand der Schutzeinrichtung 2 das Signal des Signalmittels 14 wahrnehmbar, und zwar sowohl innerhalb als auch außerhalb der Schutzeinrichtung 2, ungeachtet dessen, dass das Signalmittel 14 von dem Betätiger 8 abgedeckt ist.

Die Fig. 2 zeigt eine perspektivische Ansicht auf ein Ausführungsbeispiel eines in einem Profil 12 angeordneten Schalterkopfes 10 und die Figuren 3 und 4 zeigen in vergrößerter Darstellung Einzelheiten des Schalterkopfes 10. Das optische Signalmittel 14 ist in einer Nut 16 des Profils 12 angeordnet. Ebenfalls in der Nut 16 ist ein Polschuhe 18 aufweisender Elektromagnet einer Zuhalteeinrichtung zum lösbaren Fixieren eines vorgebbaren Zustandes der Schutzeinrichtung 2 angeordnet. Außerdem ist der Lesekopf 20 in der Nut 16 angeordnet. Das optische Signalmittel 14, der Elektromagnet und der Lesekopf 20 sind vorzugsweise in einer Baueinheit ausgeführt und mittels einer gemeinsamen und in der Nut 16 verlaufenden Anschlussleitung 24 elektrisch angeschlossen. Insbesondere können die einzelnen Komponenten jeweils einzeln für sich vergossen sein und auch miteinander durch die Vergussmasse 30 verbunden sein oder sogar in dem Profil 12 vergossen sein.

Das Signalmittel 14 umfasst die auf einer Platine 44 angeordnete Lichtquelle 46, bei der es sich um eine gegebenenfalls auch mehrfarbig leuchtende LED handelt. Das von der Lichtquelle 46 ausgestrahlte Licht wird mittels des Lichtleitmittels 48 bis an ein Lichtaustrittsfenster 22 geführt, das bündig mit der umgebenden Oberfläche des Schalterkopfes 10 abschließt.

Der Lesekopf 20 weist eine auf einer Platine 38 angeordnete Spule 40 auf, die mittels einer bündig mit dem Profil 12 abschließenden Abdeckung 42 abgedeckt ist. Die Spule 40 kann elektrisch kontaktlos Signale mit einem an dem Betätiger 8 angeordneten Gegenstück austauschen, beispielsweise mit einem Transponder 66.

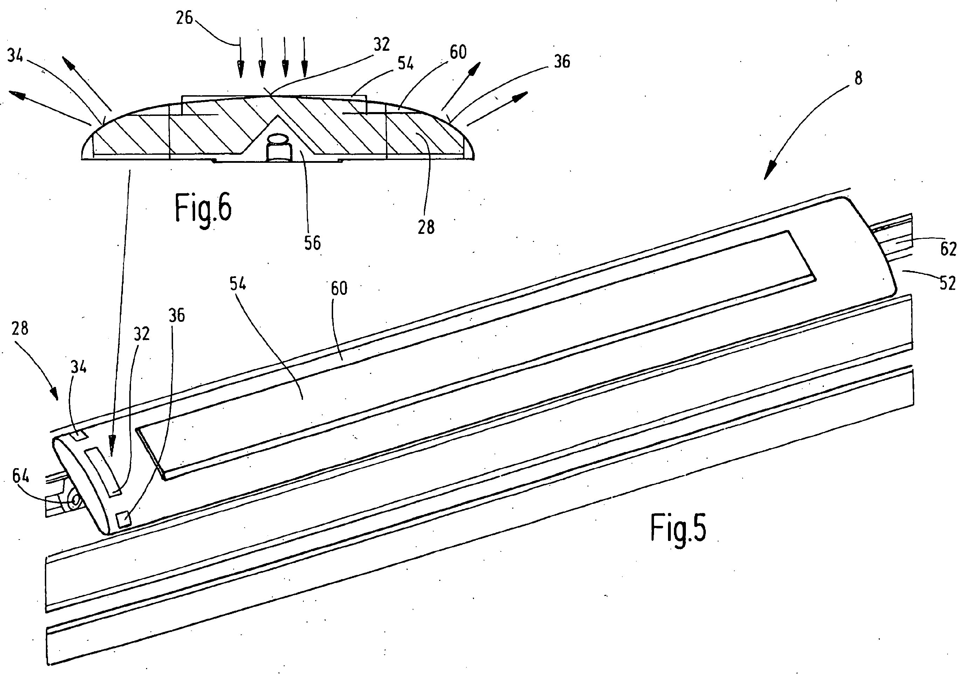

Die Fig. 5 zeigt eine perspektivische Ansicht eines Betätigers 8, der mit dem Schalterkopf 10 der Fig. 2 in Wechselwirkung bringbar ist und dadurch die Vorrichtung 1 steuert. Der Betätiger 8 ist ebenfalls mindestens abschnittsweise in einer Nut 62 eines weiteren Profils 52 angeordnet. Der Betätiger 8 weist ein Jochelement 54 auf, mittels dem der aus einem Polschuh 18 austretende und in einen benachbarten Polschuh 18 eintretende magnetische Fluss leitbar ist und das bei einer Bestromung des Elektromagneten des Schalterkopfes 10 angezogen wird und in Anlage an den Polschuhen 18 gehalten wird, so dass die Schutzeinrichtung 2 zugehalten ist. Das Jochelement 54 ist mittels eines Befestigungselements 60 an dem weiteren Profil 52 festgelegt, wobei die Position entlang der Nut 62 durch das Festlegeelement 64 fixierbar ist.

Die Fig. 6 zeigt in vergrößerter Darstellung einen Querschnitt durch den Betätiger 8 im Bereich des Lichtleitmittels 28. Im Bereich des von dem Signalmittel 14 emittierten Lichts 26 ist die Kontur des Lichtleitmittels 28 an die des umgebenden Befestigungselement 60 angepasst und im Ausführungsbeispiel abgesehen von einem zentrischen planen Abschnitt, dessen Erstreckung an die Größe des Lichtaustrittsfensters 22 angepasst ist, gekrümmt. Das einfallende Licht wird mittels einer Reflexion an einem Strahlteiler 56 in zwei rechtwinklig zum einfallenden Licht verlaufende Teilstrahlen geteilt, die an jeweils einem Austrittsfenster 34, 36 aus dem Lichtleitmittel 28 austreten. Im Bereich der Austrittsfenster 34, 36 ist die Kontur des Lichtleitmittels 28 an die des umgebenden Befestigungselement 60 angepasst und im Ausführungsbeispiel gekrümmt.

Die Fig. 7 zeigt eine Seitenansicht eines zweiten Ausführungsbeispiels eines Betätigers 108 im geschlossenen Zustand der Schutzeinrichtung 2, mithin in Anlage an dem im Profil 12 angeordneten Schalterkopf 10 der Fig. 2. Die Anordnung der Fig. 7 bestehend aus dem Schalterkopf 10 und dem Betätiger 108 bilden einen Sicherheitsschalter, mittels dem der zugehaltene Zustand der Schutzeinrichtung 2 nicht nur fixierbar ist, sondern dieser Zustand auch an eine übergeordnete Maschinensteuerung signalisierbar ist.

Der Betätiger 108 ist insbesondere zum Anbringen an einem stirnseitigen Ende eines vorzugsweise plattenförmigen zweiten Teils 6 der Schutzeinrichtung 2 vorgesehen, beispielsweise an der Stirnseite einer Glastür. Das zweite Teil 6 ist mittels eines an einer Griffplatte 76 angeordneten Handgriff 78 bewegbar. Das zweite Teil 6 kann beispielsweise eine Schwenktür, eine Hubtür oder eine Drehtür sein.

Die Fig. 8 zeigt einen Schnitt quer zur Längsachse des Schalterkopfes 10 durch den Betätiger 108 der Fig. 7 im Bereich des Lichtleitmittels 128. Im Bereich des von dem Signalmittel 14 emittierten Lichts 26 ist die Kontur des Lichtleitmittels 128 entsprechend dem Lichtaustrittsfenster 22 zentrisch zunächst plan und anschließend gekrümmt. Das einfallende Licht wird mittels einer Reflexion an einem Strahlteiler in zwei rechtwinklig zum einfallenden Licht verlaufende Teilstrahlen geteilt, die an jeweils einem Austrittsfenster 134, 136 aus dem Lichtleitmittel 128 austreten. Im Bereich der Austrittsfenster 134, 136 ist die Kontur des Lichtleitmittels 128 an die des umgebenden Befestigungselement 160 angepasst und im Ausführungsbeispiel im Wesentlichen plan.

Der Betätiger 108, insbesondere das zugehörige Befestigungselement 160, weist einen im Wesentlichen U-förmigen Querschnitt mit zwei Schenkeln 72, 74 auf, zwischen denen das zweite Teil 6 der Schutzeinrichtung aufgenommen ist. Die beiden Schenkel 72, 74 weisen mehrere, vorzugsweise auf den Schenkeln 72, 74 äquidistant angeordnete Langlöcher 70 auf, die paarweise miteinander korrespondieren. In die Länglöcher 70 sind im Wesentlichen zylindrische Befestigungsmittel 80 eingesetzt, mittels denen der Betätiger 108 fest aber beweglich an dem zweiten Teil 6 befestigt ist.

Der Betätiger 108 ist in Bezug auf das zweite Teil 6 um eine erste Achse 82 schwenkbar, die rechtwinklig zur Längsachse des Betätigers 108 und im Ausführungsbeispiel senkrecht zur Zeichenebene der Fig. 7 verläuft und/ oder um eine zweite Achse 84, die parallel zur Längsachse des Betätigers 108 und im Ausführungsbeispiel senkrecht zur Zeichenebene der Fig. 8 verläuft. Hierzu weisen die beiden Schenkel 72, 74 auf ihrer Innenseite Flächen auf, deren Abstand in Richtung auf das freie Ende der Schenkel 72, 74 zunimmt. Dadurch bilden die Innenflächen der Schenkel 72, 74 auch einen Anschlag für die Schwenkbewegung um die zweite Achse 84. Außerdem ist der Betätiger 108 entlang einer zur Längsachse des Betätigers 108 rechtwinklig verlaufenden Richtung 88 verschiebbar; dadurch kann der Betätiger 108 beim Schließen des zweiten Teils 6 nach der Anlage an den Schalterkopf 10 einfedern und insbesondere federkraftbelastet in Anlage an dem Schalterkopf 10, insbesondere an den Polschuhen 18, gehalten werden. Hierzu kann der Betätiger 108 ein Federelement aufweisen, das insbesondere zwischen dem Befestigungselement 160 und dem stirnseitigen Ende des zweiten Teils 6 angeordnet sein kann und von dem Befestigungselement 160 einstückig ausgebildet sein kann.

## Patentansprüche

1. Vorrichtung (1) zum Überwachen des Zustandes einer Einrichtung (2), insbesondere Sicherheitsschalter zum Überwachen des geschlossenen Zustandes einer Schutzeinrichtung (2) einer Maschine (3), wobei die Vorrichtung (1) einen Schalterkopf (10) und einem Betätiger (8) aufweist, die in Wechselwirkung miteinander bringbar sind und dadurch die Vorrichtung (1) steuern, wobei der Schalterkopf (10) ein optisches Signalmittel (14) aufweist zum optischen Signalisieren eines Betriebszustandes der Vorrichtung (1), und dass der Betätiger (8) ein Lichtleitmittel (28) aufweist, das mindestens ein Eintrittsfenster (32) und mindestens ein Austrittsfenster (34, 36) aufweist, und daß in einem Zustand der Vorrichtung (1), in dem der Schalterkopf (10) und der Betätiger (8) in Wechselwirkung miteinander sind, das von dem Signalmittel (14) ausgestrahlte Licht über das mindestens eine Eintrittsfenster (32) mindestens teilweise eintritt und über das mindestens eine Austrittsfenster (34, 36) austritt, **dadurch gekennzeichnet, dass** das Lichtleitmittel (28) einen Strahlteiler (56) aufweist, der das über das Eintrittsfenster (32) eintretende Licht auf mindestens zwei Austrittsfenster (34, 36) aufteilt, damit auch im geschlossenen Zustand der Schutzeinrichtung (2) das Signal des Signalmittels (14) wahrnehmbar ist, und zwar sowohl innerhalb als auch außerhalb der Schutzeinrichtung (2) und ungeachtet dessen, dass das Signalmittel (14) von dem Betätiger (8) abgedeckt ist.

2. Vorrichtung (1) nach Anspruch 1, **dadurch gekennzeichnet, dass** das optische Signalmittel (14) an dem Schalterkopf (10) und mindestens ein Eintrittsfenster (32) an dem Betätiger (8) derart angeordnet sind, dass in dem Zustand der Vorrichtung (1), in dem der Schalterkopf (10) und der Betätiger (8) in Wechselwirkung miteinander sind, das optische Signalmittel (14) und das Eintrittsfenster (32) einander gegenüberliegen.

3. Vorrichtung (1) nach einem der vorgenannten Ansprüche, **dadurch gekennzeichnet, dass** die Strahlrichtung des aus dem Austrittsfenster (34, 36) austretenden Lichts gegenüber der Strahlrichtung des von einer Lichtquelle (46) des optischen Signalmittels (14) erzeugten Lichts schräg und insbesondere quer verläuft, insbesondere dass durch das Lichtleitmittel (28) die Strahlrichtung umgelenkt ist.

4. Vorrichtung (1) nach einem der vorgenannten Ansprüche, **dadurch gekennzeichnet, dass** das optische Signalmittel (14) eine Lichtquelle (46) und ein weiteres Lichtleitmittel (48) aufweist, welches ein Lichtaustrittsfenster (22) des optischen Signalmittels (14) bildet oder an welches ein Lichtaustrittsfenster (22) anschließt.

5. Vorrichtung (1) nach einem der vorgenannten Ansprüche, **dadurch gekennzeichnet, dass** der Strahlteiler (56) in Form eines Prismas ausgebildet ist.

6. Vorrichtung (1) nach einem der vorgenannten Ansprüche, **dadurch gekennzeichnet, dass** der Schalterkopf (10) mindestens teilweise in einer Nut (16) eines Profils (12) angeordnet ist und in dem Zustand, in dem der Schalterkopf (10) und der Betätiger (8) in Wechselwirkung miteinander sind, ein Lichtaustrittsfenster (22) des optischen Signalmittels (14) durch den vorzugsweise ebenfalls mindestens teilweise in einer Nut (62) eines weiteren Profils (52) angeordneten Betätiger (8) abgedeckt ist.

7. Vorrichtung (1) nach einem der vorgenannten Ansprüche, **dadurch gekennzeichnet, dass** die Vorrichtung (1) eine Zuhalteeinrichtung zum lösbaren Fixieren eines vorgebbaren Zustandes der Einrichtung (2) aufweist, insbesondere des geschlossenen Zustandes einer Schutzeinrichtung (2) einer Maschine (3), und dass mit dem optischen Signalmittel (14) ein Zustand der Zuhalteeinrichtung signalisierbar ist.

8. Vorrichtung (1) nach Anspruch 7, **dadurch gekennzeichnet, dass** die Zuhalteeinrichtung einen vorzugsweise im Schalterkopf (10) angeordneten Magneten aufweist, der in dem Zustand der Vorrichtung (1), in dem der Schalterkopf(10) und der Betätiger (8) in Wechselwirkung miteinander sind, in Wirkverbindung mit einem den magnetischen Fluss leitenden Gegenelement (54) des Betätigers (8) bringbar ist.

9. Vorrichtung (1) nach einem der vorgenannten Ansprüche, **dadurch gekennzeichnet, dass** der Schalterkopf (10) einen Lesekopf (20) aufweist, der in dem Zustand der Vorrichtung (1), in dem der Schalterkopf (10) und der Betätiger (8) in Wechselwirkung miteinander sind, elektrisch kontaktlos in Wechselwirkung mit dem Betätiger (8) ist.

## Claims

1. Device (1) for monitoring the state of equipment (2), particularly safety switch for monitoring the closed state of protective equipment (2) of a machine (3), wherein the device (1) comprises a switch head (10) and an actuator (8), which can be brought into interaction and thereby control the device (1), wherein the switch head (10) comprises optical signalling means (14) for optical signalling of an operational state of the device (1), and the actuator (8) has optical conducting means (28) comprising at least one entry window (32) and at least one exit window (34, 36), and in a state of the device (1) in which the switch head (10) and the actuator (8) are in interaction the light emitted by the signalling means (14) at least in part enters by way of the at least one entry window (32) and exits by way of the at least one exit window (34, 36), **characterised in that** the optical conducting means (28) comprises a beam divider (56), which apportions the light entering by way of the entry window (32) to at least two exit windows (34, 36) so that even in the closed state of the protective equipment (2) the signal of the signalling means (14) is perceptible and, in particular, not only within, but also outside the protective equipment (2) and irrespective of whether the signalling means (14) is covered by the actuator (8).

2. Device (1) according to claim 1, **characterised in that** the optical signalling means (14) is so arranged at the switch head (10) and at least one exit window (32) is so arranged at the actuator (8) that in the state of the device (1) in which the switch head (10) and the actuator (8) are in interaction the optical signalling means (14) and the entry window (32) are opposite one another.

3. Device (1) according to one of the preceding claims, **characterised in that** beam direction of the light issuing from the exit window (34, 36) relative to the beam direction of the light generated by an optical source (46) of the optical signalling means (14) runs obliquely and, in particular, transversely, particularly that the beam direction is deflected by the light conducting means (28).

4. Device (1) according to any one of the preceding claims, **characterised in that** the optical signalling means (14) comprises a light source (46) and further optical conducting means (48), which forms a light exit window (22) of the optical signalling means (14) or with which a light exit window (22) is connected.

5. Device (1) according to any one of the preceding claims, **characterised in that** the beam divider (56) is constructed in the form of a prism.

6. Device (1) according to any one of the preceding claims, **characterised in that** the switch head (10) is arranged at least partly in a groove (16) of a profile member (12) and in the state in which the switch head (10) and the actuator (8) are in interaction a light exit window (22) of the optical signalling means (14) is covered by the actuator (8), which is preferably similarly arranged at least partly in a groove (62) of a further profile member (52).

7. Device (1) according to any one of the preceding claims, **characterised in that** the device (1) comprises a retaining device for releasable fixing of a predeterminable state of the equipment (2), particularly the closed state of protective equipment (2) of a machine (3), and that a state of the retaining device can be signalled by the optical signalling means (14).

8. Device (1) according to claim 7, **characterised in that** the retaining device comprises a magnet, which is preferably arranged in the switch head (10) and which in the state of the device (1) in which the switch head (10) and the actuator (8) are in interaction can be brought into operative connection with a counter-element (54), which conducts the magnetic flux, of the actuator (8).

9. Device (1) according to any one of the preceding claims, **characterised in that** the switch head (10) comprises a reading head (20) which in the state of the device (1) in which the switch head (10) and the actuator (8) are in interaction is electrically contactlessly in interaction with the actuator (8).

## Revendications

1. Dispositif (1) pour la surveillance de l'état d'un organe (2), en particulier interrupteur de sécurité pour la surveillance de l'état fermé d'un organe de protection (2) d'une machine (3), sachant que le dispositif (1) présente une tête d'interrupteur (10) et un actionneur (8) qui peuvent être amenés en interaction mutuelle et commandent ainsi le dispositif (1), sachant que la tête d'interrupteur (10) présente un moyen de signalisation optique (14) pour la signalisation optique d'un état de fonctionnement du dispositif (1) et que l'actionneur (8) présente un moyen de guidage de lumière (28) qui présente au moins une fenêtre d'entrée (32) et au moins une fenêtre de sortie (34, 36), et que dans un état du dispositif (1) dans lequel la tête d'interrupteur (10) et l'actionneur (8) se trouvent en interaction mutuelle, la lumière émise par le moyen de signalisation (14) entre au moins pour partie via la fenêtre d'entrée au moins unique (32) et sort via la fenêtre de sortie au moins unique (34, 36), **caractérisé en ce que** le moyen de guidage de lumière (28) présente un diviseur de faisceau (56) qui répartit la lumière entrant via la fenêtre d'entrée (32) sur au moins deux fenêtres de sortie (34, 36) afin que le signal du moyen de signalisation (14) soit perceptible même dans l'état fermé de l'organe de protection (2), et ce tant à l'intérieur qu'à l'extérieur de l'organe de protection (2) et en dépit du fait que le moyen de signalisation (14) soit recouvert par l'actionneur (8).

2. Dispositif (1) selon la revendication 1, **caractérisé en ce que** le moyen de signalisation optique (14) est disposé sur la tête d'interrupteur (10) et au moins une fenêtre d'entrée (32) est disposée sur l'actionneur (8) de telle sorte que le moyen de signalisation optique (14) et la fenêtre d'entrée (32) se font face dans l'état du dispositif (1) dans lequel la tête d'interrupteur (10) et l'actionneur (8) se trouvent en interaction mutuelle.

3. Dispositif (1) selon l'une des revendications précédentes, **caractérisé en ce que** la direction du faisceau de la lumière sortant de la fenêtre de sortie (34, 36) s'étend en oblique et notamment transversalement par rapport à la direction du faisceau de la lumière produite par une source lumineuse (46) du moyen de signalisation optique (14), en particulier **en ce que** la direction du faisceau est déviée par le moyen de guidage de lumière (28).

4. Dispositif (1) selon l'une des revendications précédentes, **caractérisé en ce que** le moyen de signalisation optique (14) présente une source lumineuse (46) et un autre moyen de guidage de lumière (48), qui forme une fenêtre de sortie de lumière (22) du moyen de signalisation optique (14) ou qui est suivi d'une fenêtre de sortie de lumière (22).

5. Dispositif (1) selon l'une des revendications précédentes, **caractérisé en ce que** le diviseur de faisceau (56) est réalisé sous la forme d'un prisme.

6. Dispositif (1) selon l'une des revendications précédentes, **caractérisé en ce que** la tête d'interrupteur (10) est disposée au moins pour partie dans une rainure (16) d'un profilé (12) et, dans l'état dans lequel la tête d'interrupteur (10) et l'actionneur (8) se trouvent en interaction mutuelle, une fenêtre de sortie de lumière (22) du moyen de signalisation optique (14) est recouverte par l'actionneur (8), qui est de préférence lui aussi disposé au moins pour partie dans une rainure (62) d'un autre profilé (52).

7. Dispositif (1) selon l'une des revendications précédentes, **caractérisé en ce que** le dispositif (1) présente un organe de verrouillage pour l'immobilisation libérable d'un état prédéfinissable de l'organe (2), en particulier de l'état fermé d'un organe de protection (2) d'une machine (3), et **en ce qu'**un état de l'organe de verrouillage peut être signalé par le moyen de signalisation optique (14).

8. Dispositif (1) selon la revendication 7, **caractérisé en ce que** l'organe de verrouillage présente un aimant qui est de préférence disposé dans la tête d'interrupteur (10) et qui, dans l'état du dispositif (1) dans lequel la tête d'interrupteur (10) et l'actionneur (8) se trouvent en interaction mutuelle, peut être amené en interaction avec un élément antagoniste (54) de l'actionneur (8) conduisant le flux magnétique.

9. Dispositif (1) selon l'une des revendications précédentes, **caractérisé en ce que** la tête d'interrupteur (10) présente une tête de lecture (20) qui, dans l'état du dispositif (1) dans lequel la tête d'interrupteur (10) et l'actionneur (8) se trouvent en interaction mutuelle, se trouve en interaction électriquement sans contact avec l'actionneur (8).
